# EUROPEAN PATENT APPLICATION

(11) **EP 4 610 903 A1**
(43) Date of publication of application: **03.09.2025**
(21) Application number: 25160980.6
(22) Date of filing: 28.02.2025
(51) Int. Cl.: G06Q 10/06, G06N 3/004, G06N 5/04, G06N 20/00, G06Q 10/0631, G06Q 10/0637, G06Q 10/10

(54) **METHOD, APPARATUS, SYSTEM, AND COMPUTER PROGRAM FOR PROVIDING COPILOT SERVICE BASED ON ARTIFICIAL INTELLIGENCE**

(30) Priority: 29.02.2024 KR 20240029916; 28.10.2024 KR 20240148917
(71) Applicant: Samsung SDS Co., Ltd., Seoul 05510 (KR)
(72) Inventor: Jeong, Andy, 05510 Seoul (KR); Lee, Daniel, 05510 Seoul (KR); Kim, Seungjin, 05510 Seoul (KR); Park, Jinbae, 05510 Seoul (KR); Kim, Daekyung, 05510 Seoul (KR); Lee, Sukjeong, 05510 Seoul (KR); Kwon, Ohyoung, 05510 Seoul (KR); Kim, Byungkook, 05510 Seoul (KR)
(74) Representative: Grünecker Patent- und Rechtsanwälte PartG mbB

(57) **Abstract**

A processor-implemented method including calculating a task plan, the task plan including one or more unit tasks, based on a user request, performing the task plan in association with one or more sub systems corresponding to the one or more unit tasks, and providing an answer to the user request, based on a result of performing the task plan.

## Description

### CROSS-REFERENCE TO RELATED APPLICATION(S)

This application is based on and claims priority under 35 U.S.C. 119 to Korean Patent Applications No. 10-2024-0029916, filed on February 29, 2024 and No. 10-2024-0148917, filed on October 28, 2024, in the Korean Intellectual Property Office, the disclosure of which is herein incorporated by reference in its entirety.

### BACKGROUND OF THE INVENTION

### 1. Field of the invention

The present disclosure relates to a method, an apparatus, a system, and a computer program for providing an artificial intelligence-based copilot service and, more particularly, to an artificial intelligence-based copilot service provision method, apparatus, system, and computer program capable of calculating a task plan including a series of unit tasks, based on a user request using a generative artificial intelligence model or the like and providing a service corresponding to the user request through interworking with a sub system corresponding to each unit task.

### 2. Description of the Prior Art

Recently, various services based on artificial intelligence have become more widespread, and a copilot service that provides answers to a user request by using a conversational artificial intelligence model and helps for user tasks is rapidly increasing.

However, in the conventional copilot service, answers are provided based on pre-learned general knowledge or answers are provided by reflecting information or the like provided along with a user request, so it was difficult to provide answers to the user request or perform tasks by using internal information of a specific enterprise or the existing legacy system. Accordingly, it has been difficult to provide a copilot service that can help users in a specific organization such as an enterprise or the like perform tasks by efficiently using resources such as the internal information, the legacy system, or the like.

Depending on the specific organization such as the company or the like, a configuration of a database that stores and manages the internal information may be difficult, and the constructed legacy system may also be very diverse, so implementing the copilot service that can flexibly reflect various environments of the specific organization such as the enterprise may be an even more difficult problem.

Accordingly, there is a demand for a method that allows users in the specific organization such as the enterprise or the like to perform tasks by efficiently using resources such as the internal information, the legacy system, or the like and flexibly reflects various environments of the specific organization such as the enterprise or the like to implement the copilot service, but an appropriate solution has not yet been presented.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is provided a processor-implemented method including calculating a task plan, the task plan including one or more unit tasks, based on a user request, performing the task plan in association with one or more sub systems corresponding to the one or more unit tasks, and providing an answer to the user request, based on a result of performing the task plan.

The calculating may include identifying the unit tasks, from among a plurality of preconfigured unit tasks, to perform the task plan based on the user request and determining an order of the identified plurality of preconfigure task units, to perform the task plan based on the user request.

The calculating may include searching for one or more available sub systems and reflecting a result of the searching to calculate the task plan.

The calculating may include selecting one or more candidate sub systems corresponding to the user request and searching for available sub systems among the candidate sub systems.

The performing may include generating a prompt for performing the one or more unit tasks of the task plan and performing the one or more unit tasks by using an artificial intelligence model, based on the prompt.

The performing may include selecting an API for performing the one or more unit tasks of the task plan and mapping a parameter corresponding to the selected API to perform the one or more unit tasks.

The method may include, prior to the calculating, determining whether to process the user request by the processor or to transfer the user request to an external device, and processing the user request by the external device.

The determining may include performing an intention analysis for the user request by using an artificial intelligence model and determining a device to process the user request based on the intention analysis.

The one or more sub systems may include one or more of search systems for a database including internal information of an organization to which the user belongs and existing legacy systems of the organization.

In a general aspect, here is provided an apparatus including one or more processors configured to execute instructions and a memory storing the instructions, and an execution of the instructions configures the one or more processors to calculate a task plan including one or more unit tasks, based on a user request, perform the task plan in association with one or more sub systems corresponding to the one or more unit tasks, and provide an answer to the user request, based on a result of performing the task plan.

The calculating may include identifying the unit tasks, from among a plurality of preconfigured unit tasks, to perform the task plan based on the user request and determining an order of the identified plurality of preconfigure task units, to perform the task plan based on the user request.

The calculating may include searching for one or more available sub systems and reflecting a result of the searching to calculate the task plan.

The calculating may include selecting one or more candidate sub systems corresponding to the user request and searching for available sub systems among the candidate sub systems.

The performing may include generating a prompt for performing the one or more unit tasks of the task plan and performing the one or more unit tasks by using an artificial intelligence model, based on the prompt.

The performing may include selecting an API for performing the one or more unit tasks of the task plan and mapping a parameter corresponding to the selected API to perform the one or more unit tasks.

The operations may include, prior to the calculating, determining whether to process the user request by the one or more processors or to transfer the user request to an external device and instructing the external device to process the user request.

The determining may include performing intention analysis for the user request by using an artificial intelligence model and determining a device to process the user request based on the intention analysis.

The one or more sub systems may include one or more of search systems for a database including internal information of an organization to which the user belongs and existing legacy systems of the organization.

In a general aspect, here is provided a non-transitory, computer-readable storage medium storing instructions that, when executed by a processor, configures the processor to perform calculating a task plan including one or more unit tasks, based on the user request, performing the task plan in association with one or more sub systems corresponding to the one or more unit tasks, and providing the answer to the user request, based on a result of performing the task plan.

The calculating may include identifying the unit tasks, from among a plurality of preconfigured unit tasks, to perform the task plan based on the user request and determining an order of the identified plurality of preconfigure task units, to perform the task plan based on the user request.

### BRIEF DESCRIPTION OF THE DRAWINGS

FIG. 1 illustrates a configuration of a copilot service provision system according to an embodiment of the present disclosure.
FIG. 2 is a flowchart illustrating a copilot service provision method according to an embodiment of the present disclosure.
FIG. 3 is a block diagram of a copilot service provision device according to an embodiment of the present disclosure.
FIG. 4 illustrates a detailed configuration and operation of the copilot service provision system according to an embodiment of the present disclosure.
FIGS. 5 to 9 illustrate a detailed configuration and operation of the copilot service provision device according to an embodiment of the present disclosure.
FIG. 10 illustrates a configuration of a computing device which provides a copilot service according to an embodiment of the present disclosure.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

The present disclosure has been made to solve the problem of the prior art and an aspect of the present disclosure is to provide an artificial intelligence-based copilot service provision method, apparatus, system, and computer program that allow users in a specific organization such as an enterprise or the like to perform tasks by efficiently using resources such as internal information, a legacy system, or the like.

Accordingly, the artificial intelligence-based copilot service provision method, apparatus, system, and computer program according to an embodiment of the present disclosure may allow users in a specific organization such as an enterprise or the like to perform tasks by efficiently using resources such as internal information, a legacy system, or the like.

The artificial intelligence-based copilot service provision method, apparatus, system, and computer program according to an embodiment of the present disclosure may flexibly reflect various environments of the specific organization such as the enterprise or the like to implement the copilot service.

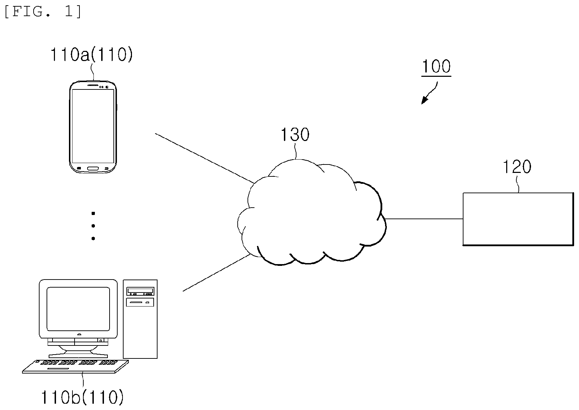

First, FIG. 1 illustrates a configuration and an operation of a copilot service provision system 100 according to an embodiment of the present disclosure. As illustrated in FIG. 1, the copilot service provision system 100 according to an embodiment of the present disclosure may include one or more user terminals 110, an artificial intelligence model or a database, and a copilot service provision device 120 capable of providing a response to a user request input through the terminals 110 by interworking with a legacy system capable of performing various tasks (for example, a mail system, an enterprise resource planning (ERP) system, or the like), an external device 130, or the like.

At this time, the user may input a request for a task to be performed or provide information related to the request through each terminal 110a or 110b, and a response to request can be received and the response can be provided to the user.

As the terminals 110, various terminals capable of inputting a request for a task to be performed, providing information related to the request, or receiving a response to the request and providing the response to the user, such as a personal computer (PC), a notebook PC, a tablet PC, and a smartphone, a PDA, may be used, but the present disclosure is not necessarily limited thereto, and various devices capable of providing information required for the copilot service may also be used as the terminals 110.

The copilot service provision device 120 may be implemented using one or more physical server devices but the present disclosure is not necessarily limited thereto, and the copilot service provision device 120 may be configured using a computer processing device, such as a desktop computer, a notebook, a tablet, or a smartphone, or implemented in various forms such as dedicated devices.

The terminals 110 and the copilot service provision device 120 can be implemented to be combined into one device.

In FIG. 1, the external device 130 may include a third party copilot system which may process the user request and provide a response separately from the copilot service provision device 120, but the present disclosure is not necessarily limited thereto.

In FIG. 1, as a communication network 140 that connects the terminals 110, the copilot service provision device 120, and the external device 130, a wired network, a wireless network, or the like may be used and, specifically, the communication network may include various communication networks such as a local area network (LAN), a metropolitan area network (MAN), and a wide area network (WAN). The communication network 140 may include the known world wide web (WWW). Further, the communication network 140 may be implemented using a data bus or the like configured to be able to transmit and receive data and the like.

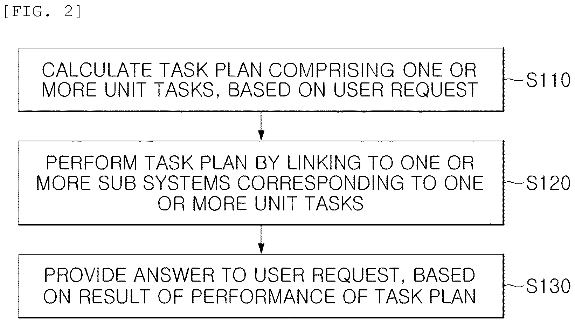

FIG. 2 is a flowchart illustrating an artificial intelligence-based copilot service provision method according to an embodiment of the present disclosure.

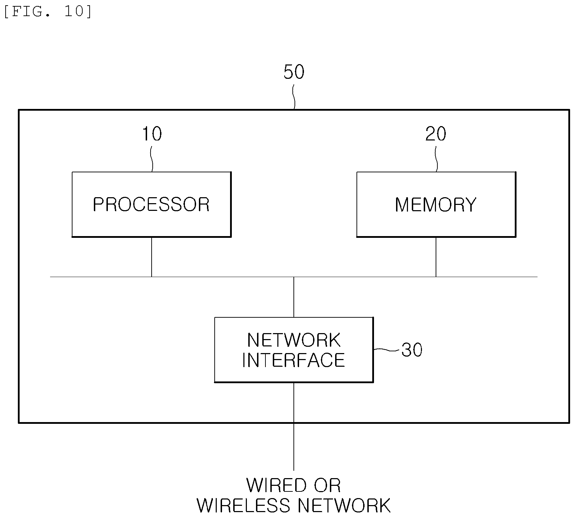

The method illustrated in FIG. 2 may be performed by, for example, the copilot service provision device 120, and the copilot service provision device 120 may be implemented to include a computing device 50 in FIG. 10 and the description below with reference to FIG. 10. For example, the copilot service provision device 120 may include a processor 10, and the processor 10 may execute an instruction configured to perform an operation for performing the copilot service of providing a response to a user request.

More specifically, as illustrated in FIG. 2, the copilot service provision method according to an embodiment of the present disclosure may include, as a method of providing a response to a user request by using the computing device 50, operation S110 of calculating a task plan including one or more unit tasks, based on the user request, operation S120 of performing the task plan through interworking with one or more sub systems corresponding to the one or more unit tasks, and operation S130 of providing a response to the user request, based on a result of performing the task plan.

The calculation step S110 may calculate a task plan including one or more unit tasks among a plurality of preconfigured unit tasks and the order thereof, based on the user request.

The calculation operation S110 may search for one or more available sub systems and reflect the inquiry result to calculate the task plan.

The calculation operation S110 may select one or more candidate sub systems corresponding to the user request and search for the available sub systems among the candidate sub systems.

The performance operation S120 may generate a prompt for performing one or more unit tasks in the task plan and perform the one or more unit tasks by using an artificial intelligence model, based on the prompt.

The performance operation S120 may select an application programming interface (API) for performing one or more unit tasks in the work plan and map a parameter corresponding to the selected API to perform the one or more unit tasks.

Prior to the calculation operation S110, operation (not shown) of determining whether the computing device processes the user request or the external device processes the user request may be further included.

In the determination operation (not shown), a device to analyze intention for the user request by using an artificial intelligence model to process the user request may be determined.

The one or more sub systems may include one or more of a search system for a database including internal information of an organization to which the user belongs and the existing legacy system of the organization.

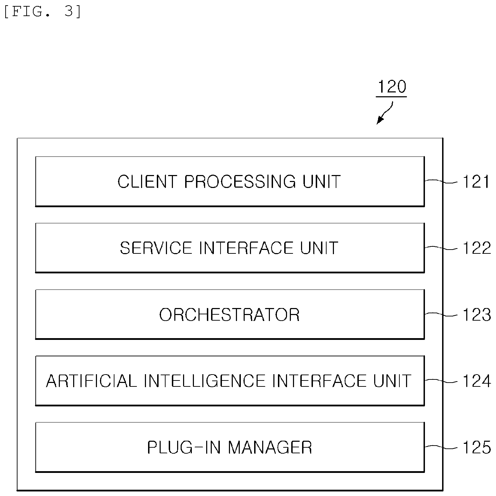

In connection with this, FIG. 3 is a block diagram of the copilot service provision device 120 according to an embodiment of the present disclosure.

As illustrated in FIG. 3, the copilot service provision device 120 may include a client processing unit 121 which may receive a user request such as a message input through the terminals 110 or the like by the user and provide a response to the user request, a service interface unit 122 which may verify authority for a copilot service of the user, classify the user request, and transfer the user request to a module to process the user request, an orchestrator 123 which calculates a work plan for performing the user request and performs the work plan, an artificial intelligence interface unit 124 which provides an interface to interwork with an intelligence artificial model such as a large language model (LLM), and a plug-in manager 125 which may search for plug-in that can be used for making the user request and provide information thereon.

Accordingly, the artificial intelligence-based copilot service provision method, apparatus, system, and computer program according to an embodiment of the present disclosure may allow users in a specific organization such as an enterprise or the like to perform tasks by efficiently using resources such as internal information, a legacy system, or the like and may flexibly reflect various environments of the specific organization such as the enterprise or the like to implement the copilot service.

Hereinafter, the configuration and operation of the artificial intelligence-based copilot service provision method, device, and system according to an embodiment of the present disclosure are described in more detail with reference to respective drawings.

First, in operation S110, the computing device 50 such as the copilot service provision device 120 may calculate a task plan including one or more unit tasks, based on a user input.

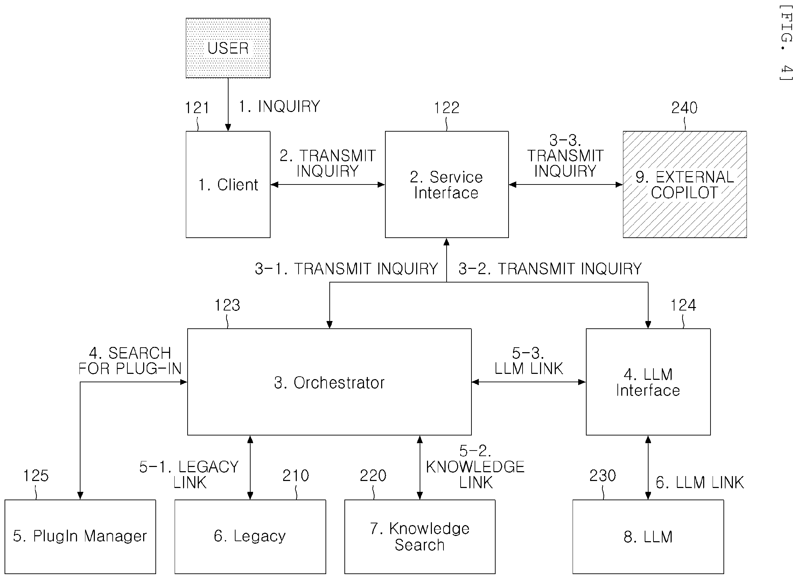

In this regard, FIG. 4 illustrates a detailed configuration and operation of the copilot service provision system 100 according to an embodiment of the present disclosure.

Referring to FIG. 4, when a request such as an inquiry is input in the form of a natural language through the terminals 110 (no. 1 of FIG. 4), the client processing unit 121 may receive the user request such as the inquiry and transfer the user request to the service interface unit 122 (no. 2 of FIG. 4).

Accordingly, the service interface unit 122 may verify authority to use the copilot service of the user, and then classify the user request and transfer the user request to a module to process the user request.

In a more detailed example, when the user request should be processed based on internal information specialized in the organization (for example, an enterprise or the like) to which the user belongs, the service interface unit 122 may transfer the user request to the orchestrator 123 to process the user request (no. 3-1 of FIG. 4) and, when the user request can be processed based on general knowledge information, may transfer the user request to an external copilot system 240 provided by a third party to process the user request (no. 3-3 of FIG. 4).

The service interface 122 may process the user request by using an artificial intelligence model through tan artificial intelligence interface unit 124 without transferring the user request to another module (no. 3-2 of FIG. 4).

Accordingly, the orchestrator 123 may calculate a task plan including one or more unit tasks, based on the user request.

At this time, the orchestrator 123 may calculate a task plan including one or more unit tasks among a plurality of preconfigured unit tasks and the order thereof, based on the user request.

The orchestrator 123 may search for one or more available sub systems and reflect the inquiry result to calculate the task plan.

In a more detailed example, the sub systems may include a legacy system 210 of the organization to which the user belongs, a search system 220 for a database including internal information of the organization, an artificial intelligence model 230, and the like.

Accordingly, the orchestrator 123 may make a request for searching for plug-in such as a sub system which can be used for making the user request to the plug-in manager 125 (no. 4 of FIG. 4).

Further, the orchestrator 123 may reflect the search result to calculate the task plan including one or more unit tasks and the order.

Subsequently, in operation S120, the computing device 50 such as the copilot service provision device 120 may perform the task plan by interworking with one or more sub systems corresponding to the one or more unit tasks.

In a more detailed example, referring to FIG. 4, according to the task plan, the orchestrator 123 may perform the task plan by interworking with the existing legacy system 210 of the organization to which the user belongs (no. 5-1 of FIG. 4) or interworking with the search system 220 for the database including internal information of the organization (no. 5-2 of FIG. 4).

Further, the orchestrator 123 may perform a series of tasks required for processing the user request through the artificial intelligence interface unit 124 in order to interwork with an artificial intelligence model such as a large language model (LLM) (no. 5-3 of FIG. 4 and no. 6 of FIG. 4).

Accordingly, in operation S130, the computing device 50 such as the copilot service provision device 120 may provide a response to the user request, based on the result of performing the task plan.

In a more detailed example, the copilot service provision device 120 may provide the response to the user request in the form of conversation using a natural language through the terminals 110 or the like.

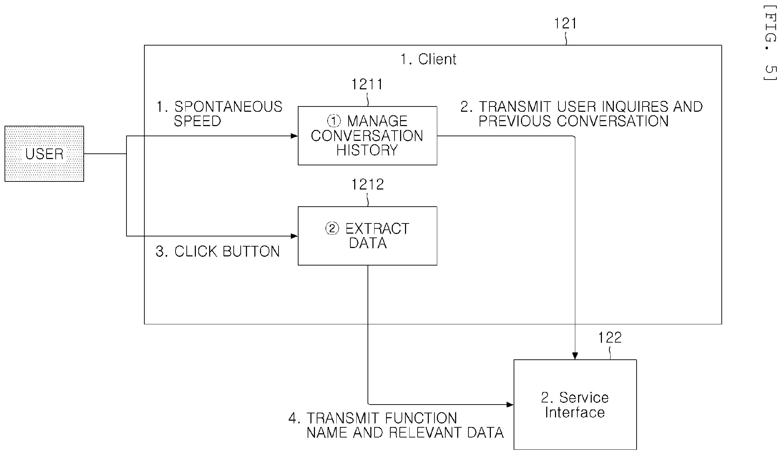

FIG. 5 illustrates a detailed configuration and operation of the client processing unit 121 in the copilot service provision device 120 according to an embodiment of the present disclosure.

Referring to FIG. 5, when the user inputs a message through a spontaneous speed (no. 1 of FIG. 5), ① a conversation history management module 1211 of the client processing unit 121 may search for the content of previous conversation in conversation history information managed to main the context of conversation and provide information including messages of the user and the previous conversation history to the service interface unit 122 (no. 2 of FIG. 5).

When the user clicks a button rather than the message (no. 3 of FIG. 5), ② a data extraction module 1212 of the client processing unit 121 may extract data corresponding to the clicked button (for example, extract the content of conversation when a conversation summarization button is clicked) and provide the extracted data and function information (for example, conversation summarization) corresponding to the button to the service interface unit 122 (no. 4 of FIG. 5).

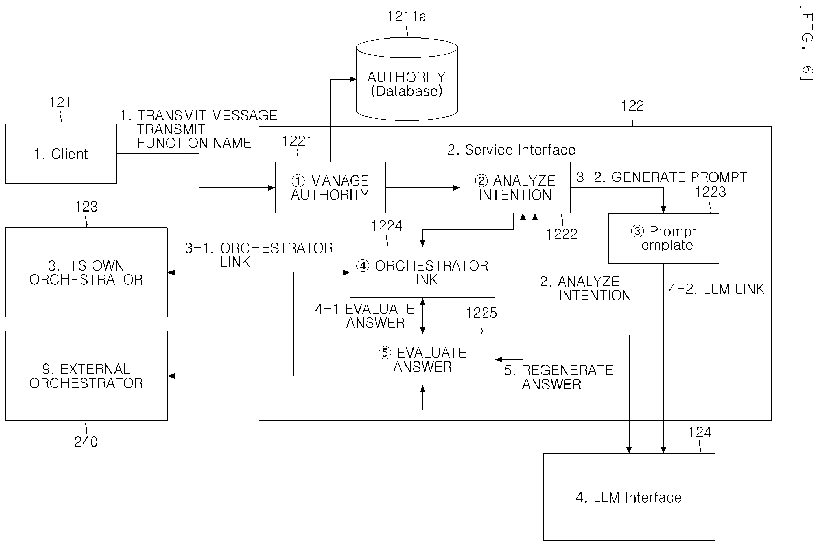

FIG. 6 illustrates a detailed configuration and operation of the service interface unit 122 in the copilot service provision service 120 according to an embodiment of the present disclosure.

Referring to FIG. 6, the service interface unit 122 may determine whether to process the user request by interworking with any module of the orchestrator 123 of the organization or the third party external copilot 240.

More specifically, ① an authority management module 1221 of the service interface unit 122 may receive information transmitted from the client processing unit 121 (no. 1 of FIG. 6) and verify whether the user has authority to use the copilot service.

Subsequently, ② an intention analysis module 1222 of the service interface unit 122 may detect the user's intention, based on the user request and interwork with any module of the orchestrator 123 or the external copilot 240 to determine whether to process the user request.

To this end, the service interface unit 122 may analyze the user's intention by using the artificial intelligence model such as the large language model (LLM) (no. 2 of FIG. 6).

In a more detailed example, the service interface unit 122 may analyze the user's intention by using the following user intention analysis prompt.

### (Example of intention analysis prompt)

| |
|---|
| You are the artificial intelligence model that detects the user's intention and determines which orchestrator will be interworked with. |
| Orchestrator to be used is decided with reference to the following user request and orchestrator function. |
| |
| User: book a meeting for me. |
| |
| ERP Orchestrator : used when the user makes a request for managing finance and human resources. |
| Work orchestrator: used when a work-related request such as sending an email or scheduling a meeting is performed. |

Further, when the user intention is clear (for example, when the user clicks the conversation summarization button), the service interface unit 122 may directly generate an answer to the user request by generating a prompt by using ③ a prompt template 1223 or the like without passing through the orchestrator 123 or the external copilot 240 and transferring the prompt to the artificial intelligence model such as the large language model (LLM) or the like (nos. 3-2 and 4-2 of FIG. 6).

At this time, the service interface unit 122 may generate the prompt by using the following summarization request prompt template and summarize the user conversation.

### (Summarization request prompt template example)

| |
|---|
| You are a summarization specialist who summarizes the content requested by the user. |
| Summarize the content of the user request. |
| |
| (content of the user request) |

Accordingly, ④ an orchestrator interworking module 1224 of the service interface unit 122 may be linked to the orchestrator 123 or the external copilot 240 corresponding to the user intention among a plurality of orchestrators 123 or the external copilot 240 according to the intention analysis result or the like.

Subsequently, ⑤ an answer evaluation module 1225 of the service interface unit 122 may evaluate whether the answer result of the orchestrator 123 or the external copilot 240 is an appropriate answer associated with the user request (no. 4-1 of FIG. 6) and, when it is determined that the answer result is not associated therewith, analyze the intention again and generate an answer again (no. 5 of FIG. 6).

At this time, the service interface unit 122 may generate the prompt by using the following answer evaluation request prompt template and evaluate the generated answer to the user request.

### (Answer evaluation request prompt template example)

| |
|---|
| You are an AI model that evaluates whether an orchestrator answer is associated with the user request. |
| Evaluate whether the following user request is associated with the orchestrator answer. |
| |
| User request : |
| Orchestrator answer : |

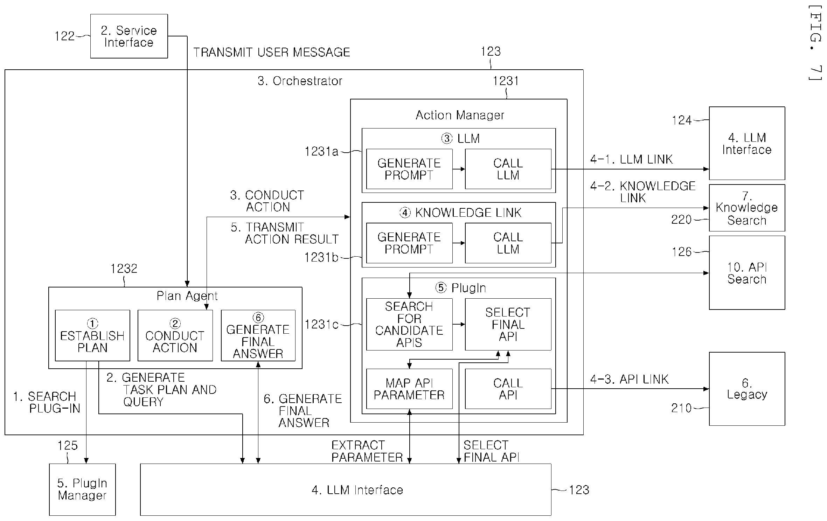

Further, FIG. 7 illustrates a detailed configuration and operation of the orchestrator 123 in the copilot service provision device 120 according to an embodiment of the present disclosure.

Referring to FIG. 7, first, a plan agent module 1232 of the orchestrator 123 may ① calculate a task plan such as the order of plug-in used to process the user request.

At this time, in order to calculate the task plan corresponding to the user request, the orchestrator 123 may search for plug-in that can be used to process the user request to the plug-in manager 125 (no. 1 of FIG. 7).

The orchestrator 123 may calculate the task plan corresponding to the user request by using the artificial intelligence model such as the large language model (LLM) or the like, based on information on the found plug-in or the like (no. 2 of FIG. 7).

In a more detailed example, the orchestrator 123 may generate the following task plan establishment prompt and calculate the task plan for the user request by using the artificial intelligence model, based thereon.

### (Task plan establishment prompt example)

| |
|---|
| You are the AI model that separates the content requested by the user into detailed tasks and makes a plan. Plug-in may be liked, the knowledge search may be performed, or LLM may be linked. |
| Make a plan for which plug-in you will use to fulfill the user request, whether ye should do the knowledge search, or link to the LLM. |
| |
| User request: find and summarize the content related to XX, schedule a meeting with Hong gil-dong at 00:00 on the topic, and send me a meeting reservation email. |
| |
| Plugin |
| - Meeting reservation plug-in: used to reserve a meeting |
| - Mail sending plug-in: used to send mail |
| Knowledge search: used to search for in-house knowledge or non-public knowledge. |
| LLM: used to search for summary, translation, or public knowledge. |

An example of the task plan generated by the artificial intelligence model using the task plan establishment prompt is described below.

### (Generated task plan example)

| |
|---|
| 1. Finds content related to XX by performing the knowledge search |
| 2. Summarizes the search result by using the LLM. |
| 3. Reserves a meeting with Hong gil-dong by using meeting reservation plug-in. |
| 4. Sends mail to Hong gil-dong by using mail sending plug-in |

Subsequently, the orchestrator 123 may execute ② the generated task plan (no. 3 of FIG. 7).

Accordingly, a task performance module 1231 of the orchestrator 123 may perform tasks for each unit task according to the task plan.

More specifically, referring to FIG. 7, the unit task may include a task linked to an artificial intelligence model such as the large language (LLM) or the like, a task linked to knowledge such as internal information of an organization, a task linked to plug-in for a legacy system of an organization, or the like.

At this time, ③ an artificial intelligence model link processing unit of the task performance module 1231 may perform a unit task through a link with the artificial intelligence model by the artificial intelligence interface unit 124 (no. 4-1 of FIG. 7).

To this end, ③ the artificial intelligence model link processing unit of the task performance module 1231 may generate the following artificial intelligence model link prompt and perform given unit tasks by using the artificial intelligence model, based thereon.

### (Artificial intelligence model link prompt example)

| |
|---|
| You are the Al model that responds to the user by performing a task, |
| Generate answer by using a pervious task, a pervious task performance result, and a current task, |
| |
| Previous task: finds content related to XX by performing the knowledge search, |
| Previous task performance result: (search result) |
| Current task: summarizes search result by using the current task LLM, |

Further, ④ a knowledge link processing unit of the task performance module 1231 may perform unit tasks of searching for internal information or the like by using the knowledge search system 220 (no. 4-2 of FIG. 7).

In addition, ⑤ a plug-in link processing unit of the task performance module 1231 may perform given unit tasks through a link with the legacy system 210.

In a more detailed example, ⑤ the plug-in link processing unit may need a link with meeting reservation plug-in of the legacy system in order to perform a unit task such as "3. Reserve the meeting with Hong gil-dong by using meeting reservation plug-in of the generated task plan and, to this end, may search for candidate APIs by using an API searcher 126 to determine which application programming interface (API) is used and, when a plurality of candidate APIs is found, select the final API by using the artificial intelligence model such as the large language model (LLM) or the like.

To this end, ⑤ the plug-in link processing unit of the task performance module 1231 may generate the following final API selection prompt and select the final API by using the artificial intelligence model, based thereon.

### (Final API selection prompt example)

| |
|---|
| You are the AI model that selects an API for processing a request by the user, |
| Select one API for processing user request from among the following APIs. |
| |
| User request: reserve a meeting with Hong gil-dong by using meeting reservation plug-in, |
| API list |
| - Meeting reservation: API used to reserve a meeting |
| - Meeting summarization: API used to summarize a meeting |
| -... |

Further, ⑤ the plug-in link processing unit of the task performance module 1231 may configure the following API parameter extraction prompt and extract a parameter required for calling the selected API by using the artificial intelligence model such as the large language model (LLM) or the like.

### (API parameter extraction prompt example)

| |
|---|
| You are the AI model that extract a parameter for calling an API. |
| Extract an API parameter for processing a user request, |
| |
| User request: reserve a meeting with Hong gil-dong by using meeting reservation plug-in |
| |
| Additional information |
| - Current date is 00/00 00:00, |
| - Information on a person who made a request is XX. |
| |
| API parameter information |
| - Date and time: meeting reservation date and time |
| - Participant: meeting participant |
| - Host: person who holds a meeting |
| - Meeting topic (option): meeting topic |

Accordingly, the plan agent module 1232 of the orchestrator 123 may generate the final response to the user request by using the artificial intelligence model such as the large language model (LLM) or the like, based on the performance result of each unit task ⑥ when all unit tasks are completed performed (no. 6 of FIG. 7).

More specifically, the generated final response to the user request is described below.

### (Generated final response example)

| |
|---|
| You are the Al model that generates an answer, based on the task performance result. |
| |
| User request: reserves a meeting with Hong gil-dong by using meeting reservation plug-in. |
| |
| Task 1 : Finds content related to XX through knowledge search. |
| Task 1 result: ... |
| Task 2 : Summarizes the search result by using the LLM. |
| Task 2 result: ... |
| Task 3 : Reserves a meeting with Hong gil-dong by using meeting reservation plug-in. |
| Task 3 result: ... |
| Task 4 : Sends mail to Hong gil-dong by using mail sending plug-in. |
| Task 4 result: ... |
| |

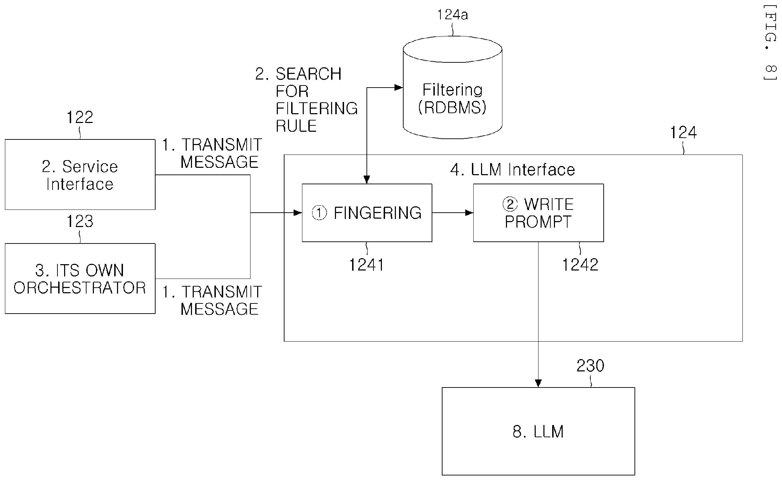

FIG. 8 illustrates a detailed configuration and operation of the artificial intelligence model interface 124 in the copilot service provision device 120 according to an embodiment of the present disclosure.

Referring to FIG. 8, when the artificial intelligence model interface 124 receives a message or the like from the service interface unit 122 or the orchestrator 123 (no. 1 of FIG. 8), ① a filtering module 1241 of the artificial intelligence model interface 124 may identify whether the message contains important information such as security information to perform filtering and, to this end, search for information on keywords, a filtering rule, or the like registered in advance in the database 124a (no. 2 of FIG. 8).

Subsequently, ② a prompt writing module 1242 of the artificial intelligence model interface unit 124 may write a prompt in accordance with a format required by the artificial intelligence model such as the large language model (LLM) and transfer the prompt to the artificial intelligence model 230 such as the large language model (LLM) to generate an answer.

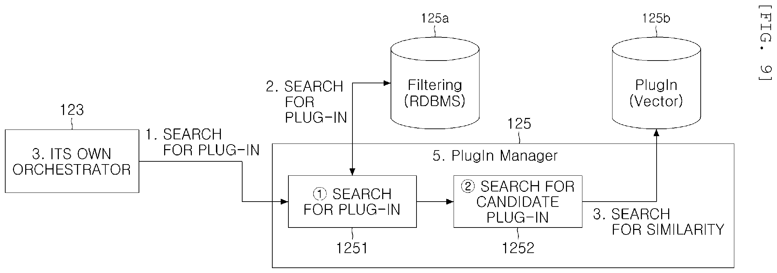

FIG. 9 illustrates a detailed configuration and operation of the plug-in manager 125 in the copilot service provision device 120 according to an embodiment of the present disclosure.

Referring to FIG. 9, when the plug-in manager 125 receives a plug-in search request from the orchestrator 123 or the like (no. 1 of FIG. 9), ① a plug-in search module 1251 of the plug-in manager 125 may inquire about plug-in list corresponding to the plug-in search request in the plug-in database 125a (no. 2 of FIG. 9).

Subsequently, when the number of found plug-in lists is plural, ② a candidate plug-in search module 1252 of the plug-in manager 125 inquires about a plug-in having the high relation with the user request among them.

To this end, ② the candidate plug-in search module 1252 of the plug-in manager 125 may perform a similarity search by using the plug-in vector database 125b (no. 3 of FIG. 9) and search for candidate plug-in having the high relation with the user request.

Accordingly, the copilot service provision device 120 may search for candidate plug-in among a plurality of plug-in and satisfy the length limit for a prompt input into the artificial intelligence model 230 such as the large language model (LLM).

The computer program according to another aspect of the present disclosure is a computer program stored in a computer-readable medium to execute, in a computer, a series of operations of the copilot service provision method that provides an answer to a user request by the copilot service provision system 100 described above. The computer program may be not only a computer program including a machine language code made by a compiler but also a computer program including an advanced language code that can be executed by a computer using an interpreter or the like. At this time, the computer is not limited to a personal computer (PC), a notebook computer, or the like, and includes all information processing devices capable of executing a computer program with a central processing unit (CPU) such as a server, a smartphone, a tablet PC, a PDA, or a mobile phone.

The computer-readable medium may continuously store a computer-executable program or may temporarily store the same for execution or download. Further, the medium may be various types of recording means or storage means in the form of a single hardware component or a combination of several hardware components, and may exist in a distributed form on the network without being limited to a medium directly accessing any computer system. Accordingly, the detailed description should not be construed in any way as restrictive and should be considered illustrative. The scope of the present disclosure should be determined by a reasonable interpretation of the appended claims, and all changes within the equivalent scope of the present disclosure are included in the scope of the present disclosure.

The copilot service provision device 120 according to an embodiment of the present disclosure may include a processor and a memory and provide an answer to a user request. The memory may include instructions configured to, when executed by the processor, cause the device to implement specific operations, the specific operations including calculating a task plan including one or more unit tasks, based on the user request, performing the task plan in association with one or more sub systems corresponding to the one or more unit tasks, and providing the answer to the user request, based on a result of performing the task plan.

The copilot service provision device 120 according to an embodiment of the present disclosure may easily implement the copilot service provision method described above with reference to FIGS. 1 to 9, and overlapping description is omitted hereinafter and the main configuration of the present disclosure is mainly described.

The calculating may include calculating the task plan including one or more unit tasks among a plurality of preconfigured unit tasks and an order thereof, based on the user request.

The calculating may include searching for one or more available sub systems and reflecting the search result to calculate the task plan.

The calculating may include selecting one or more candidate sub systems corresponding to the user request and searching for the available sub systems among the candidate sub systems.

The performing may include generating a prompt for performing one or more unit tasks in the task plan and performing the one or more unit tasks by using an artificial intelligence model, based on the prompt.

The performing may include selecting an API for performing one or more unit tasks in the task plan and mapping a parameter corresponding to the selected API to perform the one or more unit tasks.

The device may further include, prior to the calculating, determining whether to process the user request by the computing device or transfer the user request to an external device and process the user request by the external device.

The determining may include performing intention analysis for the user request by using an artificial intelligence model and determining a device to process the user request.

The one or more sub systems may include one or more of a search system for a database including internal information of an organization to which the user belongs and the existing legacy system of the organization.

FIG. 10 illustrates a device 50 to which the proposed method of the present disclosure can be applied.

Referring to FIG. 10, the device 50 may be configured to implement a copilot service provision process that provides an answer to a user request in the copilot service provision system 100 according to the proposed method of the present disclosure.

For example, the device 50 to which the proposed method of the present disclosure can be applied may include a network device such as a repeater, a hub, a bridge, a switch, a router, or a gateway, a computer device such as a desktop computer or a workstation, a mobile terminal such as a smartphone, a portable device such as a laptop computer, a home appliance such as a digital TV, and a means of transportation such as a vehicle. In another example, the device 50 to which the proposed method of the present disclosure can be applied may be included as the part of an application specific integrated circuit (ASIC) implemented in a system on chip (SoC) form.

A memory 20 may be connected to the processor 10 during the operation, and may store programs and/or instructions for the processing and control of the processor 10, data and information used in the present disclosure, control information required for data and information processing according to the present disclosure, and temporary data generated during a data and information processing process. The memory 20 may be implemented as a storage device such as read only memory (ROM), random access memory (RAM), erasable programmable read only memory (EPROM), electrically erasable programmable read only memory (EEPROM), flash memory, static RAM (SRAM), a hard disk drive (HDD), or a solid state drive (SSD).

The processor 10 may be connected (operatively connected) to the memory 20 and/or a network interface 30 during the operation, and controls the operation of each module within the device 50. Particularly, the processor 10 may perform various control functions for performing the proposed method of the present disclosure. The processor 10 may be called a controller, a microcontroller, a microprocessor, a microcomputer, or the like. The proposed method of the present disclosure may be implemented by hardware, firmware, software, or a combination thereof. When the present disclosure is implemented using hardware, an application specific integrated circuit (ASIC), a digital signal processor (DSP), a digital signal processing device (DSPD), a programmable logic device (PLD), a field programmable gate array (FPGA), or the like configured to perform the present disclosure may be included in the processor 10. Meanwhile, when the proposed method of the present disclosure is implemented using firmware or software, instructions related to a module, a procedure, a function, or the like which performs functions or operations required to implement the proposed method of the present disclosure may be included, and the instructions may be stored in the memory 20 or a computer-readable recording medium (not shown) separated from the memory 20 and configured to, when executed by the processor 10, cause the device 50 to perform the proposed method of the present disclosure.

Further, the device 50 may include a network interface device 30. The network interface device 30 may be connected to the processor 10 when operating, and the processor 10 may control the network interface device 30 to transmit or receive information and/or data, signals, wireless/wired signals that carry messages, or the like through a wireless/wired network. The network interface device 30 may support various communication standards, for example, IEEE 802 series, 3GPP LTE (-A), and 3GPP 5G and transmit and receive control information and/or data signals according to the corresponding communication standards. The network interface device 30 may be implemented outside the device 50 as necessary.

Accordingly, the artificial intelligence-based copilot service provision method, apparatus, system, and computer program according to an embodiment of the present disclosure may allow a user in a specific organization such as an enterprise or the like to efficiently use resources such as internal information or a legacy system and flexibly reflect various environments of the specific organization such as the enterprise to implement the copilot service.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A processor-implemented method, the method comprising:
calculating a task plan, the task plan comprising one or more unit tasks, based on a user request;
performing the task plan in association with one or more sub systems corresponding to the one or more unit tasks; and
providing an answer to the user request, based on a result of performing the task plan.

2. The method of claim 1, wherein the calculating comprises:
identifying the unit tasks, from among a plurality of preconfigured unit tasks, to perform the task plan based on the user request; and
determining an order of the identified plurality of preconfigure task units, to perform the task plan based on the user request.

3. The method of claim 1, wherein the calculating comprises:
searching for one or more available sub systems; and
reflecting a result of the searching to calculate the task plan.

4. The method of claim 1, wherein the calculating comprises:
selecting one or more candidate sub systems corresponding to the user request; and
searching for available sub systems among the candidate sub systems.

5. The method of claim 1, wherein the performing comprises:
generating a prompt for performing the one or more unit tasks of the task plan; and
performing the one or more unit tasks by using an artificial intelligence model, based on the prompt.

6. The method of claim 1, wherein the performing comprises:
selecting an API for performing the one or more unit tasks of the task plan; and
mapping a parameter corresponding to the selected API to perform the one or more unit tasks.

7. The method of claim 1, further comprising:
prior to the calculating, determining whether to process the user request by the processor or to transfer the user request to an external device; and
processing the user request by the external device.

8. The method of claim 1, wherein the determining comprises:
performing an intention analysis for the user request by using an artificial intelligence model; and
determining a device to process the user request based on the intention analysis.

9. The method of claim 1, wherein the one or more sub systems comprise one or more of search systems for a database comprising internal information of an organization to which the user belongs and existing legacy systems of the organization.

10. An apparatus, the apparatus comprising:
one or more processors configured to execute instructions; and a memory storing the instructions, wherein execution of the instructions configures the one or more processors to:
calculate a task plan comprising one or more unit tasks, based on a user request;
perfrom the task plan in association with one or more sub systems corresponding to the one or more unit tasks; and
provide an answer to the user request, based on a result of performing the task plan.

11. The apparatus of claim 10, wherein the calculating comprises:
identifying the unit tasks, from among a plurality of preconfigured unit tasks, to perform the task plan based on the user request; and
determining an order of the identified plurality of preconfigure task units, to perform the task plan based on the user request.

12. The apparatus of claim 10, wherein the calculating comprises:
searching for one or more available sub systems; and
reflecting a result of the searching to calculate the task plan.

13. The apparatus of claim 10, wherein the calculating comprises:
selecting one or more candidate sub systems corresponding to the user request; and
searching for available sub systems among the candidate sub systems.

14. A non-transitory, computer-readable storage medium storing instructions that, when executed by a processor, configures the processor to perform:
calculating a task plan comprising one or more unit tasks, based on a user request;
performing the task plan in association with one or more sub systems corresponding to the one or more unit tasks; and
providing an answer to the user request, based on a result of performing the task plan.

15. The computer-readable storage medium of claim 14, wherein the calculating comprises:
identifying the unit tasks, from among a plurality of preconfigured unit tasks, to perform the task plan based on the user request; and
determining an order of the identified plurality of preconfigure task units, to perform the task plan based on the user request.
